# FASCICULE DE BREVET EUROPEEN

(11) **EP 3 190 689 B1**
(45) Date de publication et mention de la délivrance du brevet: **27.05.2020**
(21) Numéro de dépôt: 16204134.7
(22) Date de dépôt: 14.12.2016
(51) Int. Cl.: H02K 11/25, H02K 3/12, H02K 15/10

(54) **STATOR POUR MACHINE ELECTRIQUE TOURNANTE**
STATOR FÜR ELEKTRISCH UMLAUFENDE MASCHINE
STATOR FOR ROTARY ELECTRIC MACHINE

(30) Priorité: 05.01.2016 FR 1650028
(43) Date de publication de la demande: 12.07.2017
(73) Titulaire: VALEO EQUIPEMENTS ELECTRIQUES MOTEUR, 94046 Créteil Cedex (FR)
(72) Inventeur: BEN-OMRANE, Ryadh, 94550 Chevilly-Larue (FR); MONTEIL, Christophe, 75011 Paris (FR)

(56) Documents cités:
- WO-A1-2015/040468
- JP-A- 2012 057 980
- JP-A- 2013 211 940
- JP-A- 2015 053 814

## Description

L'invention concerne notamment un stator pour une machine électrique tournante.

L'invention trouve une application particulièrement avantageuse dans le domaine des machines électriques tournantes telles que les alternateurs ou encore les machines réversibles. On rappelle qu'une machine réversible est une machine électrique tournante apte à travailler de manière réversible, d'une part, comme générateur électrique en fonction alternateur et, d'autre part, comme moteur électrique notamment pour démarrer le moteur thermique du véhicule automobile.

Une machine électrique tournante comprend un rotor mobile en rotation autour d'un axe et un stator fixe entourant le rotor. En mode alternateur, lorsque le rotor est en rotation, il induit un champ magnétique au stator qui le transforme en courant électrique afin d'alimenter l'électronique du véhicule et de recharger la batterie. En mode moteur, le stator est alimenté électriquement et induit un champ magnétique entraînant le rotor en rotation.

Le stator est pourvu d'un bobinage électrique comprenant une pluralité de conducteurs électriques. Lors du fonctionnement de la machine électrique tournante, ces conducteurs électriques chauffent jusqu'à un certain niveau de température. Si ce niveau de température est trop élevé, la machine électrique tournante peut être endommagée. Il est important de connaître de manière la plus précise possible la température du bobinage électrique, notamment en vue de commander la machine électrique tournante pour éviter toute surchauffe.

Le document WO 2015/040468 décrit un stator comportant un capteur de température agencé sur une ligne de neutre du bobinage.

Le document JP 2013-211940 décrit un stator comportant un capteur de température monté sur le stator par le sertissage d'un manchon sur le bobinage.

La présente invention vise à permettre de déterminer la température du bobinage d'un stator de manière précise et fiable.

A cet effet, la présente invention a donc pour objet un stator pour une machine électrique tournante de véhicule automobile selon les revendications.

Cela permet que l'élément sensible qui mesure la température soit le plus proche possible du bobinage du stator et notamment directement en contact thermique avec ce bobinage. Ainsi, la température du bobinage du stator est mesurée de manière fiable et précise. Grâce à la présente invention, il est donc possible de commander la machine électrique tournante pour éviter une surchauffe du stator qui pourrait endommager la machine électrique tournante.

Selon l'invention, chaque conducteur électrique présente une forme de barreau telle qu'une épingle présentant deux extrémités, la sonde de mesure étant agencée au niveau d'une extrémité d'un des conducteurs électriques.

En outre selon l'invention, l'élément sensible est encapsulé dans un revêtement. Cela permet de garantir le bon maintien de l'élément sensible afin d'améliorer encore plus la fiabilité de la mesure de la température. De plus, de manière avantageuse, la sonde de mesure est, au moins en partie, encapsulée dans le revêtement.

De plus selon l'invention, les conducteurs électriques sont reliés électriquement entre eux par des points de jonction, le revêtement enrobant également les points de jonction afin de les protéger.

Selon l'invention, le stator comporte, en outre, un corps doté d'encoches, le bobinage électrique traversant lesdites encoches et formant un chignon avant et un chignon arrière s'étendant respectivement en saillie de part et d'autre dudit corps du stator. Selon l'invention, la sonde de mesure s'étend dans un des chignons du bobinage électrique.

Par exemple, la sonde de mesure est disposée dans le chignon avant du stator.

Par exemple, le revêtement comporte avantageusement une résine. Cette résine est notamment de la poudre d'époxy.

En variante, le revêtement peut être un vernis du stator.

Avantageusement, le revêtement enrobe au moins une extrémité de conducteurs électriques.

L'élément sensible peut, avantageusement, être tourné vers le corps de stator.

L'élément sensible est de préférence disposé entre deux conducteurs électriques voisins circonférentiellement.

Par exemple, lesdits conducteurs électriques sont reliés entre eux au niveau de leur extrémité. Notamment, les conducteurs électriques sont reliés électriquement entre eux par soudage.

La sonde de mesure est montée en contact avec le conducteur électrique au moyen d'un dispositif de montage. Cela permet de garantir le bon positionnement de la sonde de mesure lors de l'enrobage de la sonde et des conducteurs électriques par le revêtement.

Ce dispositif de montage peut, par exemple, entourer le conducteur électrique du bobinage avec lequel la sonde de mesure est en contact. Eventuellement, ce dispositif de montage entoure deux conducteurs voisins du bobinage, notamment voisins radialement.

En outre, ce dispositif de montage maintien la sonde de mesure sur deux portions de ladite sonde.

Avantageusement, le dispositif de montage est, par exemple, une bande, par exemple adhésive, ou un ficelage.

Avantageusement, le revêtement enrobe le dispositif de montage.

Dans un mode avantageux de réalisation, la sonde de mesure est un capteur à coefficient thermique négatif (NTC).

Avantageusement, la sonde de mesure est agencée sur une partie avant du bobinage en regard d'une poulie de machine électrique tournante.

La présente invention a également pour objet une machine électrique tournante. La machine électrique tournante peut, avantageusement, former un alternateur ou une machine réversible.

Selon un mode avantageux de réalisation, la sonde de mesure comporte, en outre, au moins un fil électrique agencé pour transmettre un signal électrique à un ensemble électronique, l'ensemble électronique étant notamment monté sur la machine électrique tournante.

Avantageusement, au moins un conducteur électrique comporte une encoche dans laquelle passe le fil électrique de la sonde de mesure. De préférence, l'encoche est réalisée sur une extrémité du conducteur électrique avec lequel la sonde de mesure est en contact.

De manière avantageuse, le fil électrique s'étend sur une portion oblique du conducteur électrique du bobinage.

Selon un mode avantageux de réalisation, la machine électrique tournante comporte un carter agencé entre le stator et l'ensemble électronique, le carter comportant au moins une rainure permettant le passage d'au moins un fil électrique connecté entre la sonde de mesure et l'ensemble électronique. Cela permet de maintenir les fils électriques afin d'assurer la transmission de la mesure de la température de la sonde de mesure à l'ensemble électronique.

La présente invention pourra être mieux comprise à la lecture de la description détaillée qui va suivre, d'exemples de mise en œuvre non limitatifs de l'invention et de l'examen des dessins annexés, sur lesquels :
- la figure 1 représente, schématiquement et partiellement, une vue en coupe d'une machine électrique tournante selon un exemple de mise en œuvre de l'invention,
- la figure 2 représente, schématiquement et partiellement, une vue en perspective d'un stator de la machine électrique tournante de la figure 1, et
- la figure 3 représente, schématiquement et partiellement, une vue en perspective d'un exemple d'une partie du stator de la figure 2.

Les éléments identiques, similaires ou analogues conservent les mêmes références d'une figure à l'autre.

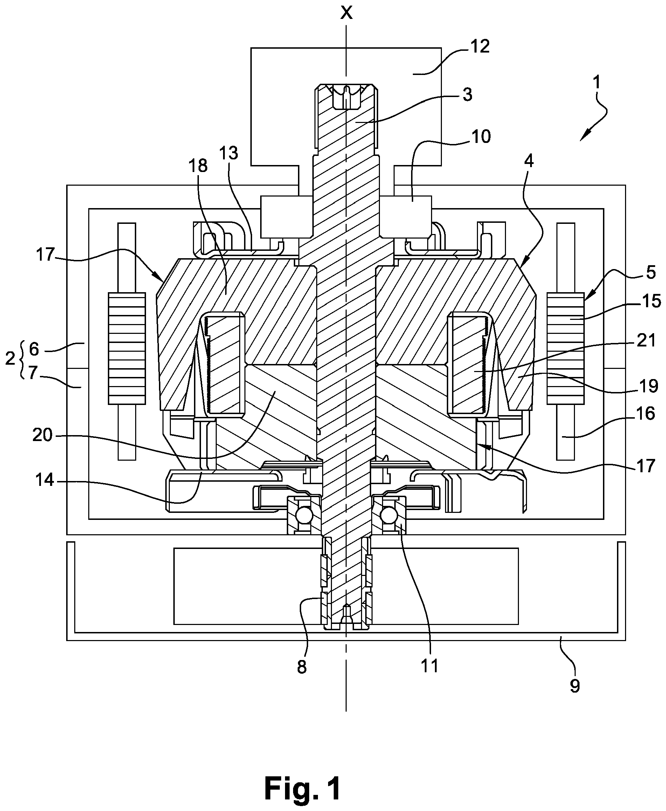

La figure 1 représente une machine électrique tournante 1 compacte et polyphasée, notamment pour véhicule automobile. Cette machine électrique tournante 1 transforme de l'énergie mécanique en énergie électrique, en mode alternateur, et peut fonctionner en mode moteur pour transformer de l'énergie électrique en énergie mécanique. Cette machine électrique tournante 1 est, par exemple, un alternateur ou une machine réversible.

La machine électrique tournante 1 comporte un carter 2. A l'intérieur de ce carter 2, elle comporte, en outre, un arbre 3, un rotor 4 solidaire en rotation de l'arbre 3 et un stator 5 entourant le rotor 4. Le mouvement de rotation du rotor 4 se fait autour d'un axe X. Dans la suite de la description les orientations radiales, ortho-radiale et axiales sont à considérer par rapport à cet axe X.

Dans cet exemple, le carter 2 comporte un palier avant 6 et un palier arrière 7 qui sont assemblés ensemble. Ces paliers 6, 7 sont de forme creuse et portent, chacun, centralement un roulement à billes 10, 11 respectif pour le montage à rotation de l'arbre 3.

Une poulie 12 est fixée sur une extrémité avant de l'arbre 3, au niveau du palier avant 6, par exemple à l'aide d'un écrou en appui sur le fond de la cavité de cette poulie. Cette poulie 12 permet de transmettre le mouvement de rotation à l'arbre 3.

L'extrémité arrière de l'arbre 3 porte, ici, des bagues collectrices appartenant à un collecteur. Des balais appartenant à un porte-balais 8 sont disposés de façon à frotter sur les bagues collectrices. Le porte-balais 8 est relié à un régulateur de tension compris dans un pont redresseur 9.

Le palier avant 6 et le palier arrière 7 peuvent comporter, en outre, des ouvertures sensiblement latérales pour le passage de l'air en vue de permettre le refroidissement de la machine électrique tournante par circulation d'air engendrée par la rotation d'un ventilateur avant 13 sur la face dorsale avant du rotor 4, c'est-à-dire au niveau du palier avant 6 et d'un ventilateur arrière 14 sur la face dorsale arrière du rotor, c'est-à-dire au niveau du palier arrière 7.

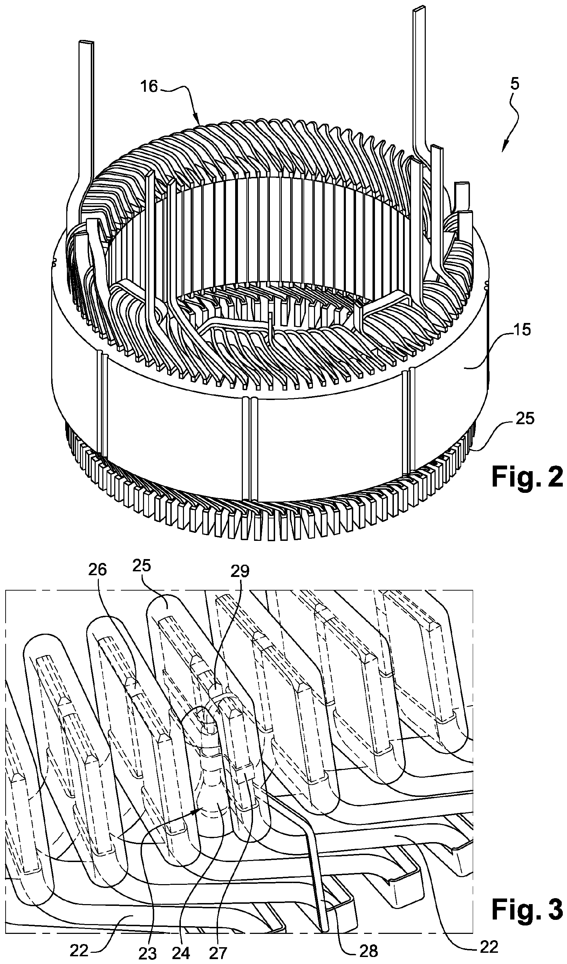

Dans cet exemple de réalisation, le stator 5 comporte un corps 15 en forme d'un paquet de tôles doté d'encoches, par exemple du type semi fermée ou ouverte, équipées d'isolant d'encoches pour le montage d'un bobinage électrique 16. Ce bobinage 16 traverse les encoches du corps 15 et forment un chignon avant et un chignon arrière de part et d'autre du corps du stator. Le bobinage 16 est connecté, par exemple, en étoile ou encore en triangle. La figure 2 illustre notamment un tel stator 5.

Dans cet exemple, le rotor 4 est un rotor à griffe. Il comporte deux roues polaires 17. Chaque roue polaire 17 est formée d'un flasque 18 et d'une pluralité de griffes 19 formants des pôles magnétiques. Le flasque 18 est d'orientation transversale et présente, par exemple, une forme sensiblement annulaire. Ce rotor 4 comporte, en outre, un noyau 20 cylindrique qui est intercalé axialement entre les roues polaires 17. Ici, ce noyau 20 est formé de deux demi noyaux appartenant chacun à l'une des roues polaires 17. Le rotor 4 comporte, entre le noyau 20 et les griffes 19, une bobine 21 comportant, ici, un moyeu de bobinage et un bobinage électrique sur ce moyeu. Par exemple, les bagues collectrices appartenant au collecteur sont reliées par des liaisons filaires à ladite bobine. Le rotor 4 peut également comporter des éléments magnétiques interposés entre deux griffes adjacentes.

Lorsque le bobinage électrique est alimenté électriquement à partir des balais, le rotor 4 est magnétisé et devient un rotor inducteur avec formation de pôles magnétiques Nord-Sud au niveau des griffes 19. Ce rotor inducteur crée un courant induit alternatif dans le stator induit lorsque l'arbre 3 est en rotation. Le pont redresseur 9 transforme alors ce courant induit alternatif en un courant continu, notamment pour alimenter les charges et les consommateurs du réseau de bord du véhicule automobile ainsi que pour recharger sa batterie.

La figure 3 illustre un exemple de réalisation du stator 5.

Le bobinage 16 du stator 5 comporte une pluralité de conducteurs électriques 22. Dans cet exemple, chaque conducteur électrique 22 présente une forme de barreau telle qu'une épingle. Chaque épingle présente, ici, deux extrémités.

De plus, le stator 5 comporte au moins une sonde de mesure 23 de température comportant au moins un élément sensible 24 agencé de manière à être en contact avec au moins un des conducteurs électriques 22 pour mesurer la température dudit bobinage 16.

La sonde de mesure 23 est, ici, agencée au niveau d'une extrémité d'un des conducteurs électriques 22. La sonde de mesure 23 s'étend dans un chignon du bobinage 16.

Dans l'exemple de la figure 3, l'élément sensible 24 est encapsulé dans un revêtement 25.

Par exemple, le revêtement 25 comporte une résine. Cette résine est notamment de la poudre d'époxy.

En variante, le revêtement 25 peut être un vernis du stator 5.

Le revêtement 25 enrobe, avec la sonde de mesure 23, au moins une extrémité du conducteur électriques 22.

Dans l'exemple de la figure 3, l'élément sensible 24 est disposé entre deux conducteurs électriques 22 voisins circonférentiellement. En outre, l'élément sensible 24 est, de préférence, tourné vers le corps 15 du stator.

Dans cet exemple, les conducteurs électriques 22 sont reliés électriquement entre eux par des points de jonction 26. Lesdits conducteurs électriques 22 sont reliés entre eux au niveau de leur extrémité. Notamment, les conducteurs électriques 22 sont reliés électriquement entre eux par soudage. De plus, le revêtement 25 enrobe également les points de jonction 26.

La sonde de mesure 23 est montée, ici, en contact avec le conducteur électrique 22 au moyen d'un dispositif de montage 27. Le dispositif de montage 27 est, par exemple, une bande, telle qu'une bande adhésive, ou un ficelage.

Ce dispositif de montage 27 peut, par exemple, entourer le conducteur électrique 22 du bobinage16 avec lequel la sonde de mesure 23 est en contact. Dans l'exemple illustré, le dispositif de montage 27 entoure deux conducteurs électriques 22 voisins, notamment voisins radialement. En outre, ce dispositif de montage 27 maintien, ici, la sonde de mesure 23 sur deux portions de ladite sonde.

De préférence, le revêtement 25 enrobe, en outre, le dispositif de montage 27.

De préférence, la sonde de mesure 23 est un capteur à coefficient thermique négatif (NTC).

La sonde de mesure 23 comporte, ici, au moins un fil électrique 28 agencé pour transmettre un signal électrique à un ensemble électronique, l'ensemble électronique étant notamment monté sur la machine électrique tournante 1.

Dans l'exemple de réalisation de la figure 3, le conducteur électrique 22, avec lequel la sonde de mesure23 est en contact, comporte une encoche 29 dans laquelle passe le fil électrique 28. De préférence, cette encoche 29 est réalisée sur une extrémité du conducteur électrique 22.

Le carter 2 comporte, ici, au moins une rainure permettant le passage des fils électriques 28 connecté entre la sonde de mesure 23 et l'ensemble électronique. De préférence, cette rainure est située sur la face interne du carter 2.

Dans cet exemple, la sonde de mesure 23 est agencée sur une partie avant du bobinage 16 en regard de la poulie 12 de la machine électrique tournante 1.

Le fait de positionner la sonde de mesure en contact thermique direct avec le bobinage électrique du stator permet de garantir une mesure fiable de la température du bobinage. De plus, cette disposition de la sonde de mesure permet de conserver des performances optimales du stator.

En outre, le fait d'utiliser un revêtement pour maintenir la sonde de mesure permet d'obtenir une mesure de la température du stator de manière simple sans modification majeure du design du stator et donc sans coût supplémentaire.

La présente invention trouve des applications en particulier dans le domaine des rotors pour alternateur ou machine réversible de véhicule automobile mais elle pourrait également s'appliquer à tout type de machine tournante.

## Revendications

1. Stator pour une machine électrique tournante de véhicule automobile, le stator (5) comportant :
- un corps (15) doté d'encoches,
- un bobinage électrique (16) traversant lesdites encoches et formant un chignon avant et un chignon arrière s'étendant respectivement en saillie de part et d'autre dudit corps (15), ce bobinage comportant une pluralité de conducteurs électriques (22) logés en partie dans les encoches, chaque conducteur électrique (22) présentant une forme de barreau telle qu'une épingle présentant deux extrémités, les conducteurs électriques (22) étant reliés électriquement entre eux au niveau de leur extrémité par des points de jonction (26) respectifs,
- au moins une sonde de mesure (23) de température comportant au moins un élément sensible (24) agencé de manière à être en contact avec au moins un conducteur électrique (22) du bobinage (16) pour mesurer la température dudit bobinage,
ledit stator étant **caractérisé en ce que** la sonde de mesure (23) s'étend dans un des chignons du bobinage électrique (16) et est agencée au niveau d'une extrémité d'un des conducteurs électriques, l'élément sensible (24) étant encapsulés dans un revêtement (25), ledit revêtement (25) enrobant également un point de jonction (26) entre deux conducteurs électriques (22).

2. Stator selon la revendication 1, **caractérisé en ce que** le revêtement (25) comporte une résine.

3. Stator selon la revendication 1 ou 2, **caractérisé en ce que** l'élément sensible (24) est disposé entre deux conducteurs électriques (22) voisins circonférentiellement.

4. Stator selon l'une quelconque des revendications 1 à 3, **caractérisé en ce que** la sonde de mesure (23) est montée, en contact avec le conducteur électrique (22), au moyen d'un dispositif de montage (27).

5. Stator selon la revendication 4, **caractérisé en ce que** le dispositif de montage (27) est une bande ou un ficelage.

6. Stator selon la revendication 4 ou 5, **caractérisé en ce que** le dispositif de montage (27) entoure le conducteur électrique (22) du bobinage (16) avec lequel la sonde de mesure (23) est en contact.

7. Stator selon l'une quelconque des revendications 1 à 6, **caractérisé en ce que** la sonde de mesure (23) est agencée sur une partie avant du bobinage (16) en regard d'une poulie de machine électrique tournante.

8. Machine électrique tournante comprenant un stator (5) selon l'une quelconque des revendications 1 à 7.

9. Machine électrique tournante selon la revendication 8, **caractérisée en ce que** la sonde de mesure (23) comporte, en outre, au moins un fil électrique (28) agencé pour transmettre un signal électrique à un ensemble électronique, l'ensemble électronique étant notamment monté sur la machine électrique tournante (1).

10. Machine électrique tournante selon la revendication 9, **caractérisée en ce qu'**au moins un conducteur électrique (22) comporte une encoche (29) dans laquelle passe le fil électrique (28) de la sonde de mesure (23).

11. Machine électrique tournante selon la revendication 9 ou 10, **caractérisée en ce que** la machine électrique tournante (1) comporte un carter (2) agencé entre le stator (5) et l'ensemble électronique, le carter (2) comportant au moins une rainure permettant le passage d'au moins un fil électrique (28) connecté entre la sonde de mesure (23) et l'ensemble électronique.

12. Machine électrique tournante selon l'une quelconque des revendications 8 à 11, formant un alternateur ou une machine réversible.

## Patentansprüche

1. Stator für eine rotierende elektrische Maschine eines Kraftfahrzeugs, wobei der Stator (5) umfasst:
- einen Körper (15), der mit Nuten versehen ist,
- eine elektrische Wicklung (16), welche die Nuten durchquert und einen vorderen Wicklungskopf und einen hinteren Wicklungskopf bildet, die sich beiderseits des Körpers (15) jeweils vorstehend erstrecken, wobei diese Wicklung mehrere elektrische Leiter (22) umfasst, die teilweise in den Nuten aufgenommen sind, wobei jeder elektrische Leiter (22) eine Stabform wie etwa die Form einer Nadel aufweist, die zwei Enden aufweist, wobei die elektrischen Leiter (22) an ihrem Ende durch jeweilige Verbindungsstellen (26) miteinander verbunden sind,
- wenigstens einen Temperaturmessfühler (23), der wenigstens ein Sensorelement (24) umfasst, das so angeordnet ist, dass es sich in Kontakt mit wenigstens einem elektrischen Leiter (22) der Wicklung (16) befindet, um die Temperatur der Wicklung zu messen,
wobei der Stator **dadurch gekennzeichnet ist, dass** sich der Messfühler (23) in einem der Wicklungsköpfe der elektrischen Wicklung (16) erstreckt und an einem Ende eines der elektrischen Leiter angeordnet ist, wobei das Sensorelement (24) in einer Beschichtung (25) eingekapselt ist, wobei die Beschichtung (25) auch eine Verbindungsstelle (26) zwischen zwei elektrischen Leitern (22) umhüllt.

2. Stator nach Anspruch 1, **dadurch gekennzeichnet, dass** die Beschichtung (25) ein Harz umfasst.

3. Stator nach Anspruch 1 oder 2, **dadurch gekennzeichnet, dass** das Sensorelement (24) zwischen zwei elektrischen Leitern (22) angeordnet ist, die in Umfangsrichtung benachbart sind.

4. Stator nach einem der Ansprüche 1 bis 3, **dadurch gekennzeichnet, dass** der Messfühler (23) mittels einer Montagevorrichtung (27) in Kontakt mit dem elektrischen Leiter (22) angebracht ist.

5. Stator nach Anspruch 4, **dadurch gekennzeichnet, dass** die Montagevorrichtung (27) ein Band oder eine Umschnürung ist.

6. Stator nach Anspruch 4 oder 5, **dadurch gekennzeichnet, dass** die Montagevorrichtung (27) den elektrischen Leiter (22) der Wicklung (16) umgibt, mit dem sich der Messfühler (23) in Kontakt befindet.

7. Stator nach einem der Ansprüche 1 bis 6, **dadurch gekennzeichnet, dass** der Messfühler (23) an einem vorderen Teil der Wicklung (16) gegenüber einer Riemenscheibe der rotierenden elektrischen Maschine angeordnet ist.

8. Rotierende elektrische Maschine, welche einen Stator (5) nach einem der Ansprüche 1 bis 7 umfasst.

9. Rotierende elektrische Maschine nach Anspruch 8, **dadurch gekennzeichnet, dass** der Messfühler (23) außerdem wenigstens ein elektrisches Kabel (28) umfasst, das dafür ausgelegt ist, ein elektrisches Signal an eine Elektronikbaugruppe zu übertragen, wobei die Elektronikbaugruppe insbesondere an der rotierenden elektrischen Maschine (1) angebracht ist.

10. Rotierende elektrische Maschine nach Anspruch 9, **dadurch gekennzeichnet, dass** wenigstens ein elektrischer Leiter (22) eine Nut (29) umfasst, in welcher das elektrische Kabel (28) des Messfühlers (23) verläuft.

11. Rotierende elektrische Maschine nach Anspruch 9 oder 10, **dadurch gekennzeichnet, dass** die rotierende elektrische Maschine (1) ein Gehäuse (2) umfasst, das zwischen dem Stator (5) und der Elektronikbaugruppe angeordnet ist, wobei das Gehäuse (2) wenigstens eine Nut umfasst, welche den Durchgang wenigstens eines elektrischen Kabels (28) ermöglicht, das zwischen dem Messfühler (23) und der Elektronikbaugruppe angeschlossen ist.

12. Rotierende elektrische Maschine nach einem der Ansprüche 8 bis 11, welche einen Wechselstromgenerator oder eine reversible Maschine bildet.

## Claims

1. Stator for a motor vehicle rotary electric machine, the stator (5) comprising:
- a body (15) provided with slots,
- an electric winding (16) passing through the said slots and forming a front winding overhang and a rear winding overhang respectively projecting on each side of the said body (15), this winding comprising a plurality of electric conductors (22) housed in part in the slots, each electric conductor (22) having the form of a bar such as a hairpin having two ends, the electric conductors (22) being electrically connected to one another at their ends by respective joints (26),
- at least one temperature measurement probe (23) comprising at least one sensitive element (24) arranged in such a way as to be in contact with at least one electric conductor (22) of the winding (16) in order to measure the temperature of the said winding,
the said stator being **characterized in that** the measurement probe (23) extends into one of the winding overhangs of the electric winding (16) and is arranged at one end of one of the electric conductors, the sensitive element (24) being encapsulated in a coating (25), the said coating (25) also enclosing a joint (26) between two electric conductors (22).

2. Stator according to Claim 1, **characterized in that** the coating (25) contains a resin.

3. Stator according to Claim 1 or 2, **characterized in that** the sensitive element (24) is positioned between two circumferentially adjacent electric conductors (22).

4. Stator according to any one of Claims 1 to 3, **characterized in that** the measurement probe (23) is mounted, in contact with the electric conductor (22), by means of a mounting device (27).

5. Stator according to Claim 4, **characterized in that** the mounting device (27) is a band or a tie cord.

6. Stator according to Claim 4 or 5, **characterized in that** the mounting device (27) surrounds the electric conductor (22) of the winding (16) with which the measurement probe (23) is in contact.

7. Stator according to any one of Claims 1 to 6, **characterized in that** the measurement probe (23) is arranged on a front part of the winding (16) facing a pulley of the rotary electric machine.

8. Rotary electric machine comprising a stator (5) according to any one of Claims 1 to 7.

9. Rotary electric machine according to Claim 8, **characterized in that** the measurement probe (23) additionally comprises at least one electric wire (28) designed to transmit an electric signal to an electronic assembly, the electronic assembly notably being mounted on the rotary electric machine (1).

10. Rotary electric machine according to Claim 9, **characterized in that** at least one electric conductor (22) comprises a slot (29) through which the electric wire (28) of the measurement probe (23) passes.

11. Rotary electric machine according to Claim 9 or 10, **characterized in that** the rotary electric machine (1) comprises a housing (2) positioned between the stator (5) and the electronic assembly, the housing (2) comprising at least one slotted opening allowing the passage of at least one electric wire (28) connected between the measurement probe (23) and the electronic assembly.

12. Rotary electric machine according to any one of Claims 8 to 11, forming an alternator or a reversible machine.
